# EUROPÄISCHE PATENTSCHRIFT

(11) **EP 4 755 612 B1**
(45) Veröffentlichungstag und Bekanntmachung des Hinweises auf die Patenterteilung: **09.09.2026**
(21) Anmeldenummer: 25202729.7
(22) Anmeldetag: 17.09.2025
(51) Int. Cl.: B29C 65/08

(54) **VERPACKUNGSKÖRPER, ANORDNUNG EINES DERARTIGEN VERPACKUNGSKÖRPERS UND EINES WEITEREN VERPACKUNGSKÖRPERS SOWIE VERFAHREN ZUM VERSCHWEISSEN EINES BEHÄLTERS UND EINES VERSCHLUSSES FÜR DEN BEHÄLTER MITTELS ULTRASCHALL ZU EINER VERPACKUNG**
PACKAGING BODY, ASSEMBLY OF SUCH A PACKAGING BODY AND ANOTHER PACKAGING BODY AND METHOD FOR WELDING A CONTAINER AND A CLOSURE FOR THE CONTAINER TO A PACKAGING BY MEANS OF ULTRASOUND
CORPS D'EMBALLAGE, ENSEMBLE D'UN TEL CORPS D'EMBALLAGE ET D'UN AUTRE CORPS D'EMBALLAGE ET PROCÉDÉ DE SOUDAGE PAR ULTRASONS D'UN RÉCIPIENT ET D'UNE FERMETURE POUR LE RÉCIPIENT À UN EMBALLAGE

(30) Priorität: 03.12.2024 DE 102024135969
(43) Veröffentlichungstag der Anmeldung: 10.06.2026
(73) Patentinhaber: Spies Kunststoffe GmbH, 49326 Melle (DE)
(72) Erfinder: Pöhls, Guido, 72555 Metzingen (DE)
(74) Vertreter: Truckenmüller, Frank

(56) Entgegenhaltungen:
- WO-A1-2024/159293
- JP-A- 2000 128 130
- JP-A- 2003 137 205

## Beschreibung

Die Erfindung betrifft einen Verpackungskörper mit den Merkmalen des Oberbegriffs des Anspruches 1, eine Anordnung eines derartigen Verpackungskörpers und eines weiteren Verpackungskörpers nach Anspruch 7 sowie ein Verfahren zum Verschweißen eines Behälters und eines Verschlusses (Deckels) für den Behälter ausgehend von einer derartigen Anordnung mittels Ultraschall zu einer Verpackung nach Anspruch 8.

### Technologischer Hintergrund und Stand der Technik

Heutzutage werden nicht flexible thermoplastische Kunststoffteile bzw. Hartplastik-Teile vielfach mittels Ultraschall verschweißt (Ultraschallschweißen). Hierzu wird eine Sonotrode auf eine Außenoberfläche eines ersten Kunststoffteils, beispielsweise eines Oberteils, gedrückt und durch eine Einleitung von hochfrequenten Schwingungen über die Sonotrode in einen eigens an dem ersten Kunststoffteil befindlichen Energieübertragungskörper, wird der Energieübertragungskörper durch Reibung aufgeschmolzen und mit einem weiteren Kunststoffteil, beispielsweise einem Unterteil, verschmolzen. Durch Spitzen oder Kanten des Energieübertragungskörpers kann die Ultraschallenergie fokussiert werden. Deshalb wird der Energieübertragungskörper in der Praxis auch mit Energierichtungsgeber (ERG) bezeichnet. Ein solcher Energierichtungsgeber hat einen Kontakt zu dem weiteren Kunststoffteil nur an seiner Spitze bzw. Kante. Die Sonotrode liegt an der Außenoberfläche des ersten Kunststoffteils vollflächig an. Durch die vollflächige Anlage werden die Temperatur der Sonotrode und die Schwingungen der Sonotrode auf die gesamte Außenoberfläche des ersten Kunststoffteils übertragen. Dadurch kommt es zu einer thermischen und mechanischen Belastung auf der Außenoberfläche des ersten Kunststoffteils. Außerdem werden die Schwingungen der Sonotrode in die durch den Energierichtungsgeber nicht abgestützten Bereiche übertragen und es kommt zu einer unerwünschten Ausbreitung der Schwingungen sowie zu Resonanzen der Schwingungen, wodurch es zu Schwingungsbrüchen kommen kann. Außerdem kann es zu einer unkontrollierten seitlichen Ausbreitung der Schmelze des aufschmelzenden bzw. aufgeschmolzenen ERG kommen. Dies kann zu optischen, beispielsweise farblichen, Veränderungen und/oder zu mechanischen Schädigungen der Außenoberfläche insbesondere des ersten Kunststoffteils führen. Derartige Probleme können noch stärker bei einer Verwendung von Etiketten, insbesondere Aufreißetiketten, auftreten, die vorzugsweise im In-Mold-Labelling (IML) Verfahren nach dem Einlegen in ein offenes Werkzeug beim Spritzgießen mit der thermoplastischen Schmelze des zu verschweißenden Kunststoffteils hinterspritzt werden, so dass das mit dem Etikett versehene fertige Kunststoffteil in einem Arbeitsschritt hergestellt wird.

Als Ultraschall bezeichnet man Schallwellen bzw. Schall mit Frequenzen oberhalb des Hörfrequenzbereichs des Menschen. Von Ultraschall spricht man in einem Frequenzbereich zwischen ca. 15 kHz bis ca. 1 GHz; Schall mit Frequenzen oberhalb dieser Grenze wird als Hyperschall bezeichnet. Beim Ultraschallschwei-ßen werden Schallwellen mit einer hohen Frequenz zwischen ca. 15 kHz bis ca. 70 kHz eingesetzt. Die Ultraschallwellen bzw. -schwingungen werden bei dem bewährten longitudinalen Schweißverfahren mit einer Schwingungsamplitude von ca. 5 µm bis ca. 50 µm mittels einer sogenannten Sonotrode in das Kunststoffteil eingeleitet. Dadurch entsteht Reibungswärme und führt zum Aufschmelzen des thermoplastischen Kunststoffs. Unter Ausübung von zusätzlichem Druck durch die Sonotrode können die zu verschweißenden Kunststoffteile dann zusammengefügt werden. Das Schweißen von Kunststoffen mittels Ultraschall hat viele Vorteile gegenüber dem Kleben oder herkömmlichen Schweißmethoden: Das Ultraschallschweißen ist insbesondere energiesparend, hochpräzise und kosteneffizient. Außerdem können exakte und reproduzierbare Schweißnähte erreicht werden, die nicht nachbearbeitet werden müssen. Ultraschallschweißen eignet sich besonders für das Verschweißen von thermoplastischen Kunststoffen. Um mit Hilfe von Ultraschall punktgenau bzw. liniengenau schweißen zu können, muss die Energie der Schallwellen gebündelt werden. Das kann durch die Geometrie der Werkzeuge (Sonotroden und Ambosse) oder des Kunststoffteils selbst (Nahtgestaltung) geschehen.

Viele Verpackungen, insbesondere Konsumgüterverpackungen, müssen im Hinblick auf die darin enthaltenen Produkte in einer heißen Sterilisationsumgebung sicher verschweißt werden. Hierzu werden Verpackungsbehälter bei einer bis zu 100 Grad Celsius heißen Umgebungstemperatur unter sterilen Bedingungen mit den Produkten abgefüllt und der Verpackungs-Verschluss bzw. Verpackungs-Deckel wird nach einem Aufsetzen auf den Verpackungsbehälter unter Verschließen der Behälteröffnung mittels Ultraschallverfahren verschweißt. Durch die hohen Umgebungstemperaturen und durch eine im Dauerbetrieb zusätzliche Erwärmung der Sonotrode kommt es beim Verschweißen zu Oberflächenbeschädigungen, die optisch und haptisch inakzeptabel sind.

Aus der JP 2003 137205 ist ein Ultraschallschweißverfahren zum zuverlässigen Verschweißen von Behälterkomponenten sowie ein Tonerbehälter bekannt geworden, bei dem zumindest der obere und der untere Behälterteil durch Ultraschallschweißen zuverlässig miteinander verschweißt sind.

Aus der WO 2024/159293 A1 ist eine Verpackung mit einem hermetischen Verschluss bekannt geworden, der aus einer einzigen, durch Ultraschallschweißen befestigten, abtrennbaren Dichtung besteht. Ein Behälter wird mittels Ultraschallschweißen hermetisch verschlossen. An einer Schwächungslinie des Deckels ist eine Sollbruchstelle vorgesehen, die einen Rand eines Deckels in zwei Teile teilt. Ein Teil des Rands des Deckels umschließt den gesamten Umfang des Deckels und der andere Teil des Rands des Deckels bleibt mit einem Rand des Behälters verschweißt, was eine mehrmalige Wiederverwendung des Deckels zum Öffnen und Schließen des Behälters ermöglicht.

### Zusammenfassung der Erfindung

Der Erfindung liegt die Aufgabe zugrunde, einen Verpackungskörper (Behälter oder Verschluss bzw. Deckel für einen Behälter) zur Verfügung zu stellen, der mittels Ultraschall mit einem weiteren Verpackungskörper (Verschlusskörper bzw. Deckel für einen Behälter oder Behälter), vorzugsweise liniengenau, derart verschweißt werden kann, dass flächige mechanische Beschädigungen und/oder Verfärbungen der Außenoberfläche des Verpackungskörpers vermieden werden. Der Erfindung liegt auch die Aufgabe zugrunde, eine Anordnung eines derartigen Verpackungskörpers (Behälter oder Verschlusskörper) und eines weiteren Verpackungskörpers (Verschlusskörper oder Behälter) zur Verfügung zu stellen, die mittels Ultraschall unter Ausbildung einer Siegelverbindung derart miteinander, vorzugsweise wieder lösbar, verschweißt werden können, dass flächige mechanische Beschädigungen und/oder Verfärbungen der Außenoberfläche insbesondere des Verpackungskörpers vermieden werden. Der Erfindung liegt auch die Aufgabe zugrunde, ein Verfahren zum Verschweißen eines Behälters und eines Verschlusskörpers bzw. Deckels zum Verschließen einer Behälteröffnung des Behälters mittels Ultraschall zu einer Verpackung zur Verfügung zu stellen, bei der flächige mechanische Beschädigungen und/oder Verfärbungen der Außenoberfläche insbesondere des Verpackungskörpers vermieden werden.

Diese Aufgabe wird hinsichtlich des Verpackungskörpers durch die Merkmale des Anspruches 1 gelöst. Demgemäß betrifft die Erfindung einen Verpackungskörper für eine Verpackung, der aus einem themoplastischen Kunststoff besteht und der
entweder
als ein Verschlusskörper (Deckel) für die Verpackung zum Verschließen einer Behälteröffnung eines Behälters für die Verpackung zur Aufnahme von festen, pastösen, fließ- und/oder schöpffähigen Produkten, insbesondere Lebensmittelprodukten, ausgebildet ist, der dazu konfiguriert ist, mit dem
Behälter mittels Ultraschall unter Ausbildung einer Siegelverbindung derart verschweißt zu werden, dass der Behälter mittels des Verschlusskörpers gegen ein Austreten eines sich in dem Behälter befindlichen Produkts aus dem Behälter und/oder gegen einen Zutritt von Stoffen wie Flüssigkeiten, insbesondere Wasser, und/oder Gasen, insbesondere Luft, in den Behälter, vorzugsweise hermetisch, dicht, insbesondere steril, vorzugsweise wieder lösbar, verschlossen ist,
   oder
als ein Behälter für die Verpackung zur Aufnahme von festen, pastösen, fließ- und/oder schöpffähigen Produkten, insbesondere Lebensmittelprodukten, ausgebildet ist, der eine Behälteröffnung aufweist und der dazu konfiguriert ist, mit einem Verschlusskörper (Deckel) mittels Ultraschall unter Ausbildung einer Siegelverbindung derart verschweißt zu werden, dass der Behälter mittels des Verschlusskörpers gegen ein Austreten eines sich in dem Behälter befindlichen Produkts aus dem Behälter und/oder gegen einen Zutritt von Stoffen wie Flüssigkeiten, insbesondere Wasser, und/oder Gasen, insbesondere Luft, in den Behälter, vorzugsweise hermetisch, dicht, insbesondere steril, vorzugsweise wieder lösbar, verschlossen ist,

wobei der Verpackungskörper einen um ein Verpackungskörper-Zentrum des Verpackungskörpers umlaufenden, vorzugsweise geschlossenen bzw. durchlaufenden, ringförmigen Verpackungskörperteil, insbesondere einen Verpackungskörperrand, aufweist, der eine Verpackungskörperteil-Außenseite und eine Verpackungskörperteil-Innenseite aufweist, die mit Verpackungskörperteil-Innenflächen begrenzt ist,
und wobei der Verpackungskörperteil einen um das Verpackungskörper-Zentrum umlaufenden, ringförmigen Vorsprung aufweist,
   der über einen um das Verpackungskörper-Zentrum umlaufenden, ringförmigen Verpackungskörper-Wandteil des Verpackungskörperteils vorsteht,
   und der sich in einer ersten Richtung (nach innen) von Verpackungskörperteil-Innenflächen der Verpackungskörperteil-Innenflächen weg bis zu einem freien Vorsprungs-Ende erstreckt, das als eine um das Verpackungskörper-Zentrum umlaufende, ringförmige Vorsprungs-Kante ausgebildet ist,
   und der als ein auch als Energierichtungsgeber (ERG) bezeichneter Energieübertragungskörper ausgebildet ist,
   und der dazu konfiguriert ist, mit einem weiteren Verpackungskörper für die Verpackung einen linienförmigen ersten Anlagekontakt, bzw., in einem Querschnitt betrachtet, einen punktförmigen ersten Anlagekontakt, zum Verschweißen des Verpackungskörpers mittels Ultraschall mit dem weiteren Verpackungskörper auszubilden,
und wobei der um das Verpackungskörper-Zentrum umlaufende ringförmige Verpackungskörperteil, insbesondere Verpackungskörperrand, des Verpackungskörpers im Bereich des Energieübertragungskörpers eine den Verpackungskörper-Wandteil enthaltende, sich in einer zweiten Richtung, insbesondere nach außen, vorzugsweise entgegengesetzt zu der ersten Richtung, erstreckende, um das Verpackungskörper-Zentrum umlaufende, ringförmige Aufwölbung aufweist, die eine Aufwölbungs-Außenseite und eine Aufwölbungs-Innenseite mit Aufwölbungs-Innenflächen der Verpackungskörper-Innenflächen aufweist, die einen um das Verpackungskörper-Zentrum umlaufenden, ringförmigen Aufwölbungs-Hohlraum begrenzt, und die dazu konfiguriert ist, mit einer auf der Aufwölbungs-Außenseite der Aufwölbung anglegbaren Sonotrode einen linienförmigen zweiten Anlagekontakt bzw., in einem Querschnitt betrachtet, einen punktförmigen zweiten Anlagekontakt, zum Verschweißen des Verpackungskörpers mittels Ultraschall mit dem weiteren Verpackungskörper auszubilden, und wobei der Energieübertragungskörper auf der Aufwölbungs-Innenseite der Aufwölbung innerhalb des durch die Aufwölbung, insbesondere nach innen, begrenzten Aufwölbungs-Hohlraums angeordnet ist und den Aufwölbungs-Hohlraum der Aufwölbung begrenzt. Durch eine derartige Aufwölbung kann eine linienförmige Anlage der Sonotrode erreicht werden, wodurch eine direkte Schwingungseinleitung mittels der Sonotrode ohne zusätzliche Wärmeübertragung der Sonotrode in die Außenoberfläche des Verpackungskörperteils, insbesondere Verpackungskörperrands, erzielbar ist. Dadurch, dass der Energieübertragungskörper auf der Aufwölbungs-Innenseite der Aufwölbung innerhalb des durch die Aufwölbung, insbesondere nach innen, begrenzten Aufwölbungs-Hohlraums angeordnet ist und den Aufwölbungs-Hohlraum begrenzt, lässt sich eine flächige Anlage der beiderseits des Energieübertragungskörpers angeordneten Anlageflächen des Verpackungskörperteils, insbesondere des Verpackungskörperrands, an an einer gegenüberliegenden Anlagefläche eines weiteren Verpack-ungskörperteils zum Zwecke des Verschweißens mittels Ultraschall zu einer Verpackung und dadurch eine Dämpfung der Ultraschallschwingungen erreichen, wodurch sich eine präzise und vergleichsweise schmale Schweißnaht erzielen läßt.

Gemäß einer bevorzugten Ausgestaltung kann vorgesehen sein, dass der Aufwölbung-Hohlraum der Aufwölbung auf einer ersten Seite des Energieübertragungskörpers von einer um das Verpackungskörper-Zentrum umlaufenden ringförmigen ersten Anlagefläche des Verpackungskörperteils, insbesondere Verpackungskörperrands, begrenzt ist und auf einer von der ersten Seite wegweisenden zweiten Seite des Energieübertragungskörpers von einer um das Verpackungskörper-Zentrum umlaufenden ringförmigen zweiten Anlagefläche des Verpackungskörperteils, insbesondere Verpackungskörperrands, begrenzt ist, die in einer gemeinsamen gedachten Anlageflächen-Ebene angeordnet sind, und dass der Energieübertragungskörper in der ersten Richtung, insbesondere nach innen, über die Aufwölbungs-Innenflächen maximal bzw. höchstens bis zu der Anlageflächen-Ebene vorsteht. Dadurch kann eine weiter verbesserte flächige Anlage der Anlageflächen, also der ersten Anlagefläche und der zweiten Anlagefläche, des Verpackungskörperteils, insbesondere des Verpackungskörperrands, an einer gegenüberliegenden Anlagefläche eines weiteren Verpack-ungskörperteils zum Zwecke des Verschweißens mittels Ultraschall zu einer Verpackung und dadurch eine Dämpfung der Ultraschallschwingungen erreicht werden, wodurch sich eine präzise und vergleichsweise schmale Schweißnaht erzielen läßt.

Gemäß einer weiter verbesserten Ausgestaltung kaann vorgesehen sein, dass der Energieübertragungskörper vollständig innerhalb des durch die Aufwölbung, insbesondere nach innen, begrenzten Aufwölbungs-Hohlraums angeordnet ist. Demgemäß kann vorgesehen sein, dass der Energieübertragungskörper nicht bis zu der Anlagelfächen-Ebene vorsteht, in der die erste Anlagefläche und die zweite Anlagefläche angeordnet sind. Dadurch wird es möglich, dass beim Ultraschallverschweißen mittels einer an dem freien Aufwölbungsende der Aufwölbung mit einem linienförmigen Kontakt anliegenden Sonotrode, mittels welcher der Verpackungskörperteil, insbesondere der Verpackungskörperrand an einer gegenüberliegenden Anlagefläche eines weiteren Verpackungskörperteils angedrückt bzw. angepresst wird, zuerst die erste ringförmige Anlagefläche des Verpackungskörperteils, insbesondere des Verpackungskörperrands, und die zweite ringförmige Anlagefläche des Verpackungskörperteils, insbesondere des Verpackungskörperrands, des Verpackungskörpers (Verschlusskörper oder Behälter) unter Ausübung von Druckkräften auf die Aufwölbung auf einen weiteren Verpackungskörperteil, insbesondere einen weiteren Verpackungskörperrand, des weiteren Verpackungskörpers (Behälter oder Verschlusskörper) gedrückt werden und erst anschließend der Energieübertragungskörper des Verpackungskörpers (Verschlusskörper oder Behälter) unter fortgesetzter Ausübung von Druckkräften auf die Aufwölbung auf den weiteren Verpackungskörperteil, insbesondere weiteren Verpackungskörperrand, des weiteren Verpackungskörpers (Behälter oder Verschlusskörper) gedrückt wird. Dadurch kann zunächst eine Abdichtung des Aufwölbungs-Hohlraums der Aufwölbung auf beiden Seiten des Energieübertragungskörpers erreicht werden, bevor der Energiübertragungskörper mittels der Ultraschallschwingungen bzw. mittels Ultraschall aufgeschmlozen wird, so dass die Schmelze in einem schmäleren Schweißnahtbereich als bislang verbleibt, wodurch eine präzise und vergleichsweise schmale Schweißnaht erreichbar ist.

Gemäß einer weiter verbesserten Ausführungsform kann vorgesehen sein, dass der Aufwölbungs-Hohlraum der Aufwölbung ein Hohlraum-Volumen aufweist, das gleich groß oder größer ist wie ein Vorsprungs-Volumen des Vorsprungs bzw. des Energieübertragungskörpers, das dieser, in der ersten Richtung, insbesondere nach innen, betrachtet, ausgehend von der den Energieübertragungskörper innerhalb des Aufwölbungs-Hohlraums seitlich begrenzenden Aufwölbungs-Innenflächen bis zu dem freien Vorsprungs-Ende aufweist. Dadurch kann die Ausbildung einer noch präziseren und noch schmäleren Schweißnaht erreicht werden.

Gemäß einer besonders bevorzugten Ausgestaltung kann vorgesehen sein, dass die den Energieübertragungskörper innerhalb des Aufwölbungs-Hohlraums dere Aufwölbung seitlich begrenzenden Aufwölbungs-Innenflächen schräg, insbesondere schräg zu der Anlageflächen-Ebene, und/oder konkav ausgebildet sind. Dadurch kann beim Aufschmelzen des Energieübertragungskörpers mittels Ultraschall erreicht werden, dass die Schmelze zurück in des Zentrum des Energieübertragungskörpers gedrückt wird, wodurch die Schmelze und die Wärmeenergie im Zentrum des Energieübertragungskörpers bleiben, wodurch sich die Ausbildung einer noch präziseren und noch schmäleren Schweißnaht erreichen lässt.

Gemäß einer bevorzugten Weiterbildung kann vorgesehen sein, dass die Aufwölbung in einem an den Energieübertragungskörper angrenzenden Bereich des Verpackungskörper-Wandteils des Verpackungskörperteils, insbesondere des Verpackungskörperrands, auf einer ersten Seite des Energieübertragungskörpers oder auf der ersten Seite des Energieübertragungskörpers eine um das Verpackungskörper-Zentrum umlaufende, ringförmige, erste Dünnstelle aufweist, die von einer ringförmigen ersten Innenfläche der Aufwölbungs-Innenflächen begrenzt ist und auf einer von der ersten Seite wegweisenden zweiten Seite des Energieübertragungskörpers oder auf der von der ersten Seite wegweisenden zweiten Seite des Energieübertragungskörpers eine um das Verpackungskörper-Zentrum umlaufende, ringförmige, zweite Dünnstelle aufweist, die von einer ringförmigen zweiten Innenfläche der Aufwölbungs-Innenflächen begrenzt ist. Durch derartige Dünnstellen läßt sich eine Schwingungs-Entkoppelung zu den die Aufwölbung umgebenden Verpackungskörperteilen des Verpackungskörpers erreichen, wodurch sich eine noch präzisere Schweißnaht erreichen lässt.

Die Erfindung betrifft auch eine Anordnung des erfindungsgemäßen Verpackungskörpers und eines weiteren Verpackungskörpers aus einem thermoplastischen Kunststoff oder aus dem thermoplastischen Kunststoff des Verpackungskörpers, bei denen es sich um einen Behälter zur Aufnahme von festen, pastösen, fließ- und/oder schöpffähigen Produkten, insbesondere Lebensmittelprodukten, und um einen Verschlusskörper bzw. Deckel zum Verschließen einer Behälteröffnung des Behälters handelt, wobei der Behälter und der Verschlusskörper bzw. Deckel dazu konfiguriert sind, mittels Ultraschall unter Ausbildung einer Siegelverbindung derart verschweißt zu werden, dass der Behälter mittels des Verschlusskörpers gegen ein Austreten eines sich in dem Behälter befindlichen Produkts aus dem Behälter und/oder gegen einen Zutritt von Stoffen wie Flüssigkeiten, insbesondere Wasser, und/oder Gasen, insbesondere Luft, in den Behälter, vorzugsweise hermetisch, dicht, insbesondere steril, vorzugsweise wieder lösbar, verschlossen ist. Eine derartige Anordnung läßt sich mittels Ultrschall bzw. Ultraschallwellen vorteilhaft zu einer versiegelten Verpackung verschweißen. Ein weiterer Vorteil der erfindungsgemäßen Anordnung ist es, dass die zwei zu verschweißenden Bauteile (Verschlusskörper bzw. Deckel und Behälter) nur soweit zueinander ausgerichtet bzw. zentriert sein müssen das sich die Seite des Energieübertragungskörpers (ERG) auf der zu verschweißenden Gegenfläche befindet. Der Energieübertragungskörper (ERG) und die den Aufwölbungs-Hohlraum enthaltende Aufwölbung sind komplett Bestandteil eines einzigen Bauteils der Bauteile und lassen Ungenauigkeiten der zu verschweißenden Bauteile zu, solange sich diese auf der zu verschweißenden Gegenfläche befinden. In der Praxis ist das äußerst vorteilhaft gegenüber möglichen Lösungen, bei denen einerseits eine Begrenzung an einem ersten Bauteil der Bauteile und andererseits der Energieübertragungskörper(ERG) an einem gegenüberliegenden zweiten Bauteil der Bauteile angeordnet wären.

Die Erfindung betrifft auch ein Verfahren zum Verschweißen eines Behälters und eines Verschlusskörpers bzw. Deckels zum Verschließen einer Behälteröffnung des Behälters mittels Ultraschall zu einer Verpackung, wobei ausgehend von der erfindungsgemäßen Anordnung die folgenden Schritte durchgeführt werden:
a) falls noch nicht geschehen, Anlegen des um das Verpackungskörper-Zentrum des Verpackungskörpers (Verschlusskörper oder Behälter) umlaufenden, ringförmigen Verpackungskörperteils, insbesondere Verpackungskörperrands, des Verpackungskörpers (Verschlusskörper oder Behälter) und eines um ein weiteres Verpackungskörper-Zentrum des weiteren Verpackungskörpers (Behälter oder Verschlusskörper) umlaufenden, vorzugsweise geschlossenen bzw. durchgehenden, ringförmigen, weiteren Verpackungskörperteils, insbesondere weiteren Verpackungskörperrands, des weiteren Verpackungskörpers (Behälter oder Verschlusskörper), vorzugsweise unmittelbar, aneinander derart, dass der als Energieübertragungskörper ausgebildete Vorsprung des Verpackungskörpers mit seiner Vorsprungs-Kante in der ersten Richtung auf eine weitere Verpackungskörperteil-Fläche des weiteren Verpackungskörperteils, insbesondere des weiteren Verpackungskörperrands, des weiteren Verpackungskörpers (Behälter oder Verschluss) vorsteht,
b) wobei oder wonach eine ringförmige Sonotrode auf der Aufwölbungs-Außenseite, insbesondere unmittelbar, an einem in der zweiten Richtung vorstehenden freien Aufwölbungsende der Aufwölbung bzw. an der Aufwölbung des Verpackungskörpers angelegt wird,
c) wobei oder wonach mittels der Sonotrode Ultraschallwellen auf und in die Aufwölbung sowie über die Aufwölbung in den Energieübertragungskörper derart eingeleitet werden, dass der Energieübertragungskörper aufschmilzt,
d) wobei vor dem Schritt c), während des Schritts c) oder nach dem Schritt c) die Sonotrode unter Ausübung von Druckkräften in der ersten Richtung auf der Aufwölbungs-Außenseite, insbesondere unmittelbar, auf das in der zweiten Richtung vorstehende freie Aufwölbungsende der Aufwölbung bzw. auf die Aufwölbung gedrückt wird, so dass der ringförmige Verpackungskörperteil, insbesondere der Verpackungskörperrand, des Verpackungskörpers (Verschluss oder Behälter) und der ringförmige weitere Verpackungskörperteil, insbesondere der weitere Verpackungskörperrand, des weiteren Verpackungskörpers (Behälter oder Verschlusskörper) unter Ausbildung einer Siegelverbindung derart miteinander verbunden bzw. verschweißt werden, dass der Behälter mittels des Verschlusskörpers bzw. Deckels gegen ein Austreten eines sich in dem Behälter befindlichen Produkts aus dem Behälter und/oder gegen einen Zutritt von Stoffen wie Flüssigkeiten, insbesondere Wasser, und/oder Gasen, insbesondere Luft, in den Behälter, vorzugsweise hermetisch, dicht, insbesondere steril, vorzugsweise wieder lösbar, verschlossen ist.

Gemäß einer Ausführungsvariante des Verfahrens kann vorgesehen sein, dass mittels der Sonotrode zuerst die erste ringförmige Anlagefläche des Verpack-ungskörperteils, insbesondere des Verpackungskörperrands, und die zweite ringförmige Anlagefläche des Verpackungskörperteils, insbesondere Verpackungskörperrands, des Verpackungskörpers (Verschlusskörper oder Behälter) unter Ausübung von Druckkräften in der ersten Richtung auf der Aufwölbungs-Außenseite, insbesondere unmittelbar, auf das in der zweiten Richtung vorstehende freie Aufwölbungsende der Aufwölbung bzw. auf die Aufwölbung auf den ringförmigen weiteren Verpackungskörperteil, insbesondere weiteren Verpackungskörperrand, des weiteren Verpackungskörpers (Behälter oder Verschlusskörper) gedrückt werden, und erst anschließend der Energieübertragungskörper des Verpackungskörpers (Verschlusskörper oder Behälter) unter fortgesetzter Ausübung von Druckkräften in der ersten Richtung auf der Aufwölbungs-Außenseite, insbesondere unmittelbar, auf das in der zweiten Richtung vorstehende freie Aufwölbungsende der Aufwölbung bzw. auf die Aufwölbung auf den ringförmigen weiteren Verpackungskörperteil, insbesondere weiteren Verpackungskörperrand, des weiteren Verpackungskörpers (Behälter oder Verschlusskörper) gedrückt wird. Dadurch lässt sich eine noch präzisere und noch schmälere Schweißnaht erreichen.

Es versteht sich, dass die vorgenannten Maßnahmen im Rahmen der Ausführbarkeit beliebig miteinander kombinierbar sind.

Ein vorteilhaftes Ausführungsbeispiel der Erfindung ist nachfolgend anhand der Figuren beschrieben.

### Kurzbeschreibung der Figuren

Es zeigen:

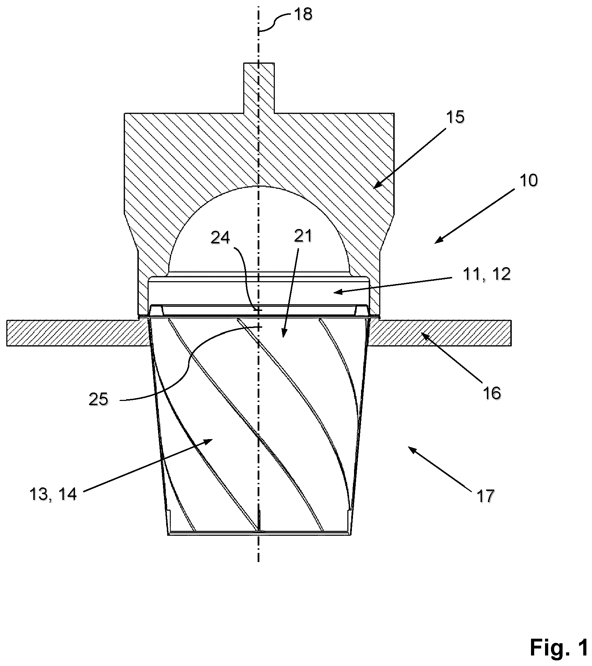

- Fig. 1: eine Vorrichtung zum Verschweißen eines Verpackungskörpers in Form eines Verschlusses für einen Behälter mit einem als Behälter ausgebildeten weiteren Verpackungskörper mittels Ultraschall (Ultraschallwellen) unter Verwendung einer Sonotrode zu einer Verpackung, in einem eine Zentralachse enthaltenden Querschnitt;

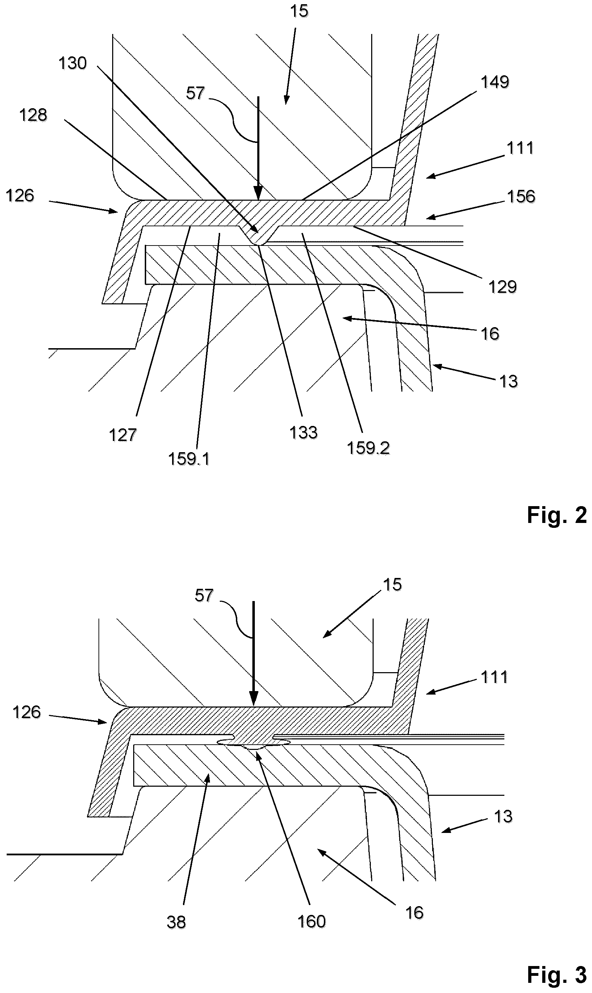

- Fig. 2: einen Ausschnitt einer Füge-Anordnung in einem ersten Verfahrensstadium, in dem ein Verschluss (Deckel) nach dem Stand der Technik mit seinem an einem Verschlussrand des Verschlusses angeordneten Energieübertragungskörper an einem Behälterrand eines Behälters anliegt, wobei an einer Außenfläche eines Rands des Verschlusses eine Sonotrode zur Einleitung von Ultraschall und zur Übertragung von Druckkräften angelegt ist, in einem Querschnitt;
- Fig. 3: die Füge-Anordnung nach dem Stand der Technik gemäß Figur 2 in einem nachfolgenden Verfahrensstadium, in dem der Energieübertragungskörper des Verschlusses mittels der Sonotrode teilweise aufgeschmolzen und auf den Behälterrand des Behälters aufgedrückt und teilweise mit diesem verschmolzen ist, in einem Querschnitt;

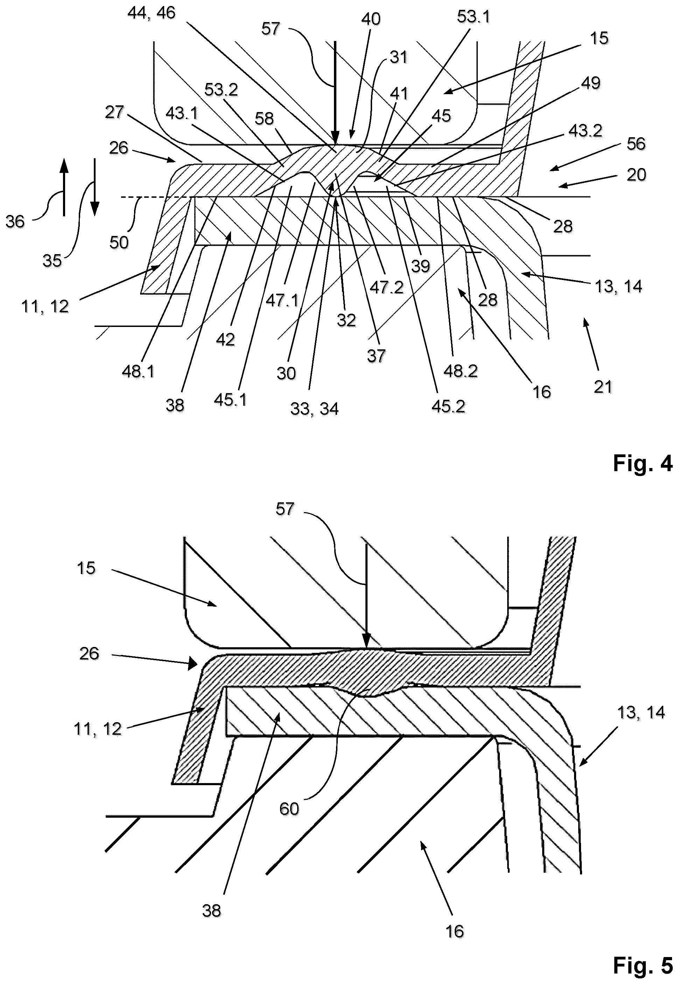

- Fig. 4: eine erfindungsgemäße Füge-Anordnung in einem ersten Verfahrensstadium, in dem ein erfindungsgemäßer Verschluss (Deckel) mit seinem in einer Aufwölbung eines Verschlussrands des Verschlusses angeordneten Energieübertragungskörper an einem Behälterrand eines Behälters anliegt, wobei an einer Außenfläche der Aufwölbung eines Verschlussrands des Verschlusses eine Sonotrode zur Einleitung von Ultraschall und zur Übertragung von Druckkräften angelegt ist, in einem der Figur 2 entsprechenden Querschnitt;
- Fig. 5: die Füge-Anordnung gemäß Figur 4 in einem nachfolgenden Verfahrensstadium, in dem mittels der an der Außenfläche der Aufwölbung anliegenden Sonotrode der Energieübertragungskörper des Verschlusses teilweise aufgeschmolzen und auf den Behälterrand des Behälters aufgedrückt und teilweise mit diesem verschmolzen ist, in einem der Figur 3 entsprechenden Querschnitt.

### Detaillierte Beschreibung der Figuren

In Figur 1 ist eine Vorrichtung 10 zum Verschweißen eines als Verschlusskörper 11 bzw. als Deckel ausgebildeten Verpackungskörpers 12 für einen Behälter 13 mit einem als Behälter 13 ausgebildeten weiteren Verpackungskörper 14 mittels Ultraschall (Ultraschallwellen) unter Verwendung einer Sonotrode 15 und einer auch als Maske bezeichenbaren Werkstückaufnahme 16 zu einer Verpackung 17 in einem eine Zentralachse 18 der vorgenannten Gegenstände enthaltenden Querschnitt gezeigt.

Der als 11 Verschlusskörper bzw. Deckel ausgebildete Verpackungskörper 12 für die Verpackung 17 besteht aus einem thermoplastischen Kunststoff, vorzugweise aus Polypropylen. Der als Behälter 13 ausgebildete weitere Verpackungskörper 14 besteht ebenfalls aus einem thermoplastischen Kunststoff, vorzugsweise ebenfalls aus Polypropylen, insbesondere aus dem gleichen Kunststoff wie der Verpackungskörper 12.

In den Figuren 1 und 4 ist eine erfindungsgemäße Anordnung 20 des erfindungsgemäßen Verpackungskörpers 12 aus einem thermoplastischen Kunststoff und des weiteren Verpackungskörpers 14 aus einem thermoplastischen Kunststoff gezeigt. Bei dem weiteren Verschlusskörper 14 handelt es sich um einen Behälter 13 zur Aufnahme von festen, pastösen, fließ- und/oder schöpffähigen Produkten, insbesondere Lebensmittelprodukten. Bei dem Verpackungskörper 12 handelt es sich um einen Verschlusskörper 11 bzw. Deckel zum Verschließen einer Behälteröffnung 21 des Behälters 13. Der Behälter 13 und der Verschlusskörper 11 bzw. Deckel sind dazu konfiguriert, mittels Ultraschall (Ultraschallwellen) unter Ausbildung einer Siegelverbindung 22 derart verschweißt zu werden, dass der Behälter 13 mittels des Verschlusskörpers 11 gegen ein Austreten eines sich in dem Behälter 13 befindlichen Produkts aus dem Behälter 13 und/oder gegen einen Zutritt von Stoffen wie Flüssigkeiten, insbesondere Wasser, und/oder Gasen, insbesondere Luft, in den Behälter, 13 vorzugsweise hermetisch, dicht, insbesondere steril, vorzugsweise wieder lösbar, verschlossen ist.

In den Figuren 2 und 3 ist eine Füge-Anordnung 156 nach dem Stand der Technik gezeigt. Diese umfasst einen Verschlusskörper 111 bzw. Deckel nach dem Stand der Technik und einen zugehörigen Behälter 13 nach dem Stand der Technik. Es ist jeweils auch eine ringförmige Sonotrode 15 nach dem Stand der Technik gezeigt, die an ihrem freien Anlageende im Wesentlichen eben oder im Wesentlichen flächig oder im Wesentlichen planeben gestaltet ist. Die Sonotrode 15 liegt auf einer mit einer flachen bzw. planebenen Außenfläche 149 gebildeten Außenseite 128 bzw. Oberseite eines umlaufenden, sich radial nach außen erstreckenden Verschlusskörperrands 126 des Verschlusskörpers 111 bzw. Deckels flach an. Auf der Innenseite 127 bzw. Unterseite des Verschlusskörperrands 126 dieses Verschlusskörpers 111 bzw. Deckels ist ein umlaufender, ringförmiger Energieübertragungskörper 130 ausgebildet. Dieser Energieübertragungskörper 130 erstreckt sich ausgehend von flachen bzw. planebenen Innenflächen 129 auf der Innenseite 128 bzw. Unterseite des Verschlusskörperrands 126 des Verschlusskörpers 111 bzw. Deckels in einer ersten Richtung 35 von diesen Innenflächen 129 weg nach unten bis zu seiner ringförmigen Anlagekante 133. Diese ringförmige Anlagekante 133 dieses Energieübertragungskörpers 130 liegt an einer flachen bzw. planebenen Verpackungskörperteil-Fläche 39 eines umlaufenden, sich radial nach außen erstreckenden Behälterrands 38 des Behälters 13 an. Dadurch ist ein linienförmiger Anlagekontakt zwischen dem Energieübertragungskörper 130 und der Verpackungskörperteil-Fläche 39 des Behälterrands 38 ausgebildet. Zwischen den Innenflächen 129 auf der Innenseite 128 bzw. Unterseite des Verschlusskörperrands 126 des Verschlusskörpers 111 und der gegenüberliegenden Verpackungskörperteil-Fläche 39 des Behälterrands 38 des Behälters 13 sind beiderseits des Energieübertragungskörpers 130 ein erster RingSpalt 159.1 und ein zweiter Ringspalt 159.2 ausgebildet, der gleich groß ist wie der erste Ringspalt 159.1. Der erste Ringspalt 159.1 und der zweite Ringspalt 159.2 sind von dem Energieübertragungskörper 130 begrenzt. Folglich liegt der Verschlusskörper 111 bzw. Deckel nach dem Stand der Technik ausschließlich über seinen Energieübertragungskörper 130 an dem Behälterrand 38 des Behälters 13 nach dem Stand der Technik an.

Wird nun ausgehend von der in der Figur 2 gezeigten Füge-Anordnung 156 mittels der dort gezeigten Sonotrode 15 Ultraschall in den Verschlusskörper 111 bzw. Deckel nach dem Stand der Technik derart eingeleitet, dass dessen Energieübertragungskörper 130 aufgeschmolzen wird, und wird während des Aufschmelzens über die Sonotrode 15 eine Druckkraft 57 auf den Verschlusskörperrand 126 des Verschlusskörpers 111 bzw. Deckels in Richtung 35 des Behälterrands 38 des Behälters 13 ausgeübt, kommt es zu einer unkontrollierten seitlichen Ausbreitung der Schmelze (siehe Figur 3). Dadurch ergibt sich ein unkontrollierter und vergleichsweise breiter Schmelzebereich in Verbindung mit einer Ausbildung einer entsprechend breiten Schmelznaht bzw. Schweißnaht in einem Teilbereich 160 des Behälterrands 38. Aufgrund der vollflächigen Anlage der Sonotrode 15 an der an der Außenseite 128 bzw. Oberseite des Verschlusskörperrands 126, in Verbindung mit einer entsprechend flächigen Einbringung der Ultraschallschwingungen, kommt es zu einer thermischen und mechanischen Belastung auf der Außenfläche 149 des Verschlusskörperrands 126. Außerdem werden die Ultraschallschwingungen in die nicht von dem Energieübertragungskörper 130 abgestützten seitlichen Bereiche des Verschlusskörpers 111 bzw. Deckels übertragen, so dass es zu einer unerwünschten Schwingungs-Ausbreitung sowie zu Resonanzen kommt, welche zu Schwingungsabbrüchen führen können. Aufgrund der vorstehend beschriebenen Vorgänge kommt es zu Oberflächenbeschädigungen, die optisch und haptisch inakzeptabel sind. Ein sicheres Ultraschallverschweißen bei beschädigungsarmer bzw. kontrollierter Oberflächenmarkierung ist nicht möglich.

Der insbesondere in der Figur 4 gezeigte erfindungsgemäße Verschlussköper 11 bzw. Deckel für eine Verpackung 17 dient zum Verschließen der Behälteröffnung 21 des auch in der Figur 1 gezeigten Behälters 13. Der Verschlusskörper 11 bzw.

Deckel ist dazu konfiguriert, mit dem Behälter 13 mittels Ultraschall (Ultraschallschwingungen) unter Ausbildung einer Siegelverbindung 22 derart verschweißt zu werden, dass der Behälter 13 mittels des Verschlusskörpers 11 gegen ein Austreten eines sich in dem Behälter 13 befindlichen Produkts aus dem Behälter 13 und/oder gegen einen Zutritt von Stoffen wie Flüssigkeiten, insbesondere Wasser, und/oder Gasen, insbesondere Luft, in den Behälter, 13 vorzugsweise hermetisch, dicht, insbesondere steril, vorzugsweise wieder lösbar, verschlossen ist.

Der die Behälteröffnung 21 aufweisende Behälter 13 bzw. die Verpackung 17 dienen zur Aufnahme von festen, pastösen, fließ- und/oder schöpffähigen Produkten, insbesondere Lebensmittelprodukten. Der Behälter 13 ist dazu konfiguriert, mit dem Verschlusskörper 11 bzw. Deckel mittels Ultraschall (Ultraschallschwingungen) unter Ausbildung einer Siegelverbindung 22 derart verschweißt zu werden, dass der Behälter 13 mittels des Verschlusskörpers 11 gegen ein Austreten eines sich in dem Behälter 13 befindlichen Produkts aus dem Behälter 13 und/oder gegen einen Zutritt von Stoffen wie Flüssigkeiten, insbesondere Wasser, und/oder Gasen, insbesondere Luft, in den Behälter 13, vorzugsweise hermetisch, dicht, insbesondere steril, vorzugsweise wieder lösbar, verschlossen ist

Der als Verschlusskörper 11 bzw. Deckel für den Behälter 13 ausgebildete Verpackungskörper 12 weist einen um ein die Zentralachse 18 enthaltendes Verpackungskörper-Zentrum 24 des Verpackungskörpers 11 umlaufenden, geschlossenen bzw. durchlaufenden, ringförmigen Verpackungskörperteil 26 in Form eines Verpackungskörperrands auf. Der Verpackungskörperteil 26 weist eine Verpackungskörperteil-Außenseite 27 und eine Verpackungskörperteil-Innenseite 28 auf. Die Verpackungskörperteil-Außenseite 27 ist mit einer Verpackungskörperteil-Außenfläche 49 begrenzt. Die Verpackungskörperteil-Innenseite 28 ist mit einer Verpackungskörperteil-Innenfläche 29 begrenzt.

Der Verpackungskörperteil 26 bzw. der Verpackungskörperrand weist einen um das Verpackungskörper-Zentrum 24 umlaufenden, ringförmigen Vorsprung 30 auf. Der Vorsprung 30 steht über einen um das Verpackungskörper-Zentrum 24 umlaufenden, ringförmigen Verpackungskörper-Wandteil 31 des Verpackungskörperteils 26 vor. Der Vorsprung 30 erstreckt sich in einer ersten Richtung 35 nach innen bzw. nach unten von den Verpackungskörperteil-Innenflächen 29 weg bis zu einem freien Vorsprungs-Ende 32, das als eine um das Verpackungskörper-Zentrum 24 umlaufende, ringförmige Vorsprungs-Kante 33 bzw. Anlagekante ausgebildet ist. Der Vorsprung 30 ist als ein auch als Energierichtungsgeber (ERG) bezeichneter Energieübertragungskörper ausgebildet. Der Vorsprung 30 ist dazu konfiguriert, mit dem weiteren Verpackungskörper 14 (Behälter 13) für die Verpackung 17 einen linienförmigen ersten Anlagekontakt 34, bzw., in dem Querschnitt gemäß Figur 4 betrachtet, einen punktförmigen ersten Anlagekontakt, zum Verschweißen des Verpackungskörpers 12 (Verschlusskörper 11 bzw. Deckel) mittels Ultraschall (Ultraschallschwingungen) mit dem weiteren Verpackungskörper 14 (Behälter 13) auszubilden.

Der um das Verpackungskörper-Zentrum 24 umlaufende ringförmige Verpackungskörperteil 26 bzw. Verpackungskörperrand des Verpackungskörpers 12 (Verschlusskörper 11 bzw. Deckel) weist im Bereich des Energieübertragungskörpers 30 eine den Verpackungskörper-Wandteil 31 enthaltende, sich in einer zweiten Richtung 36 bzw. nach außen, entgegengesetzt zu der ersten Richtung 35 erstreckende, um das Verpackungskörper-Zentrum 24 umlaufende, ringförmige Aufwölbung 40 auf. Die Aufwölbung 40 weist eine Aufwölbungs-Außenseite 41 bzw. Auwölbungs-Oberseite mit konvexen Aufwölbungs-Außenflächen 58 auf. Die Aufwölbung 40 weist eine Aufwölbungs-Innenseite 42 bzw. Aufwölbungs-Unterseite mit schrägen und konkaven Aufwölbungs-Innenflächen 43.1, 43.2 der Verpackungskörper-Innenflächen 29 auf. Die Verpackungskörper-Innenflächen 29 bzw. die Aufwölbungs-Innenflächen 43.1, 43.2 begrenzen einen um das Verpackungskörper-Zentrum 24 umlaufenden, ringförmigen Aufwölbungs-Hohlraum 45; 45.1, 45.2. Die Aufwölbung 40 ist dazu konfiguriert, mit der auf der Aufwölbungs-Außenseite 41 der Aufwölbung 40 anglegbaren bzw. angelegten Sonotrode 15 einen linienförmigen zweiten Anlagekontakt 46, bzw. in dem Querschnitt gemäß Figur 4 betrachtet, einen punktförmigen zweiten Anlagekontakt, zum Verschweißen des Verpackungskörpers 12 (Verschlusskörper 11 bzw. Deckel) mittels Ultraschall (Ultraschallschwingungen) mit dem weiteren Verpackungskörper 14 (Behälter 13) auszubilden. Der Energieübertragungskörper 30 ist auf der Aufwölbungs-Innenseite 42 bzw. Aufwölbungs-Unterseite der Aufwölbung 40 innerhalb des durch die Aufwölbung 40 in der ersten Richtung 35 nach innen bzw. nach unten begrenzten Aufwölbungs-Hohlraums 45 angeordnet und begrenzt den Aufwölbungs-Hohlraum 45.

Der als Verschlusskörper 11 bzw. Deckel ausgebildete Verpackungskörper 12 ist rotationssymmetrisch zu der das Verschlusskörper-Zentrum 24 enthaltenen Zentralachse 18 gestaltet.

Der Aufwölbung-Hohlraum 45; 45.1, 45.2 ist auf einer ersten Seite 47.1 des Energieübertragungskörpers 30 von einer um das Verpackungskörper-Zentrum 24 umlaufenden, ringförmigen, ersten Anlagefläche 48.1 des Verpackungskörperrands 26 begrenzt und ist auf einer von der ersten Seite 47.1 wegweisenden zweiten Seite 47.2 des Energieübertragungskörpers 30 von einer um das Verpackungskörper-Zentrum 24 umlaufenden, ringförmigen, zweiten Anlagefläche 48.2 des Verpackungskörperrands 26 begrenzt. Die erste Anlagefläche 48.1 und die zweite Anlagefläche 48.2 sind einer gemeinsamen gedachten Anlageflächen-Ebene 50 angeordnet. Der Energieübertragungskörper 30 steht in der ersten Richtung 35 nach innen bzw. nach unten über die Aufwölbungs-Innenflächen 43.1, 43.2 der Aufwölbung 40 bis zu der Anlageflächen-Ebene 50 vor. Demgemäß steht der Energieübertragungskörper 30 in der ersten Richtung 35 nach innen bzw. nach unten nicht über die Anlagefächen-Ebene 50 hinaus über die Aufwölbungs-Innenflächen 43.1, 43.2 vor. Der Energieübertragungskörper 30 ist also innerhalb des durch die Aufwölbung 40 nach innen bzw. nach unten begrenzten Aufwölbungs-Hohlraums 45; 45.1, 45.2 angeordnet.

Der Aufwölbungs-Hohlraum 45 weist ein Hohlraum-Volumen auf, das größer ist als ein Vorsprungs-Volumen des Vorsprungs bzw. des Energieübertragungskörpers 30, das dieser, in der ersten Richtung 35 nach innen bzw. nach unten betrachtet, ausgehend von der den Energieübertragungskörper 30 innerhalb des Aufwölbungs-Hohlraums 45; 45.1, 45.2 seitlich begrenzenden Aufwölbungs-Innenflächen 43.1, 43.2 bis zu dem freien Vorsprungs-Ende 32 bzw. bis zu dem freien Ende 32 des Energieübertragungskörpers 30 aufweist. Dadurch ist es möglich, dass bei dem Aufschmelzen des Energieübertragungsköpers 30 die Schmelze zunächst vollständig in dem Aufwölbungs-Hohlraum 45 bzw. in den auf beiden Seiten 47.1, 47.2 des Energieübertragungskörpers 30 angeordneten Aufwölbungs-Hohlräumen 45.1, 45.2, aufgenommen, so dass es zu keinem oder im Wesentlichen zu keinem seitlichen Herausdrücken dieser Schmelze zwischen die an der Verpackungskörperteil-Fläche 39 des Behälterrands 38 anliegenden Anlageflächen 48.1, 48.2 des Verschlusskörpers 11 bzw. Deckels kommen kann.

Die den Energieübertragungskörper 30 innerhalb des Aufwölbungs-Hohlraums 45; 45.1, 45.2 seitlich begrenzenden Aufwölbungs-Innenflächen 43.1, 43.2 der Aufwölbung 40 sind schräg zu der Anlageflächen-Ebene 50 und konkav ausgebildet. Bei einem Pressen bzw. Andrücken der Aufwölbung 40 des Verschlusskörpers 11 mittels der Sonotrode 15 in der ersten Richtung 35 nach inen bzw. nach unten wird die Schmelze des Energieübertragungskörpers 30 wieder in Richtung des Zentrums 37 des Energieübertragungskörpers 30 gedrückt. Dadurch bleibt die Schmelze des Energieübertragungskörpers 30 und die Wärmeenergie im Zentrum 37 und sorgt für eine präzise sowie vergleichweise schmale Schweißnaht.

Die Aufwölbung des Verschlusskörpers 11 (Deckels) bzw. des Verpackungskörpers 12 weist in einem an den Energieübertragungskörper 30 angrenzenden Bereich des Verpackungskörper-Wandteils 31 des Verpackungskörperteils 26 auf der ersten Seite 47.1 des Energieübertragungskörpers 30 eine um das Verpackungskörper-Zentrum 24 umlaufende, ringförmige, erste Dünnstelle 53.1 auf, die von einer ringförmigen ersten Innenfläche der Aufwölbungs-Innenflächen 43.1, 43.2 begrenzt ist und weist auf der von der ersten Seite 47.1 wegweisenden zweiten Seite 47.2 des Energieübertragungskörpers 30 eine um das Verpackungskörper-Zentrum 24 umlaufende, ringförmige, zweite Dünnstelle 53.2 auf, die von einer ringförmigen zweiten Innenfläche der Aufwölbungs-Innenflächen 43.1, 43.2 begrenzt ist. Dadurch wird eine Schwingungs-Entkopplung in einer Richtung von dem freien Aufwölbungs-Ende 44 der Aufwölbung 40 weg erreicht.

Der als Behälter 13 gestaltete weitere Verpackungskörper 14 ist rotationssymmetrisch zu der Zentralachse 18 gestaltet. Die Zentralachse 18 enthält ein, vorzugsweise im Bereich der Behälteröffnung 21 des Behälters 13 ausgebildetes, weiteres Verpackungskörper-Zentrum 25 des weiteren Verpackungskörpers 14 (Behälters 13).

Es versteht sich, dass der weitere Verpackungskörper 14 bzw. der Behälter 13 und der zugehörige Verpackungskörper 12, also der Verschlusskörper 11 bzw. Deckel, auch nicht rotationssymmetrisch zu einer Zentralachse bzw. nicht mit einem kreisförmigen Umfang ausgebildet sein können, also beispielweise mit einem viereckförmigen oder rechteckförmigen Umfang um die jeweilige Zentralachse.

Werden nun ausgehend von der in Figur 4 gezeigten Füge-Anordnung 56 über die Sonotrode 15 Ultraschallwellen in die Aufwölbung 40 des Verschlusskörpers 11 bzw. Deckels und über die Aufwölbung 40 in den Energieübertragungskörper 30 eingeleitet, schmilzt der Energieübertragungskörper 30 auf. Wird vorzugsweise zugleich über die Sonotrode 15 eine Druckkraft 57 in der ersten Richtung 35 und folglich in Richtung des Behälterrands 39 des Behälters 13 ausgeübt, wird die Aufwölbung 40 in der ersten Richtung 35 zusammengedrückt. Zugleich wird die Schmelze seitlich sowohl in Richtung des Verpackungskörper-Zentrums 24 des Verschlusskörpers 11 bzw. Deckels als auch in einer entgegengesetzten Richtung von dem Verpackungskörper-Zentrum 24 des Verschlusskörpers 11 bzw. Deckels weg weggequetscht, und zwar in die kleiner werdenden seitlichen Aufwölbungs-Hohlräume. Dabei wird der jeweilige Winkel, den ihre jeweils schräge Aufwölbungs-Innenfläche zu der gegenüberliegenden Verpackungskörperteil-Fläche 39 des Behälterrands 38 des Behälters 13 aufweist, immer kleiner. Dadurch wird die Schmelze in Richtung des Zentrums 37 des aufschmelzenden Energieübertragungskörpers 30 zurückgedrückt. Dadurch bleibt die Schmelze und die Wärmeenergie in dem Zentrum 30, wodurch es zur Ausbildung einer präzisen und vergleichsweise schmalen Schmelznaht kommt. Mit dem Aufschmelzen des Energieübertragungskörpers 30 schmilzt auch ein zugeordneter Teilbereich 60 des gegenüberliegenden Behälterrands 38 des Behälters 13 auf (siehe Figur 5). Es ergibt sich eine kontrollierte Ausbreitung der Schmelze und eine seitliche Begrenzung der Schmelze. Durch die linienförmige Anlage der Sonotrode 15 an der Aufwölbung 40 des Verschlusskörpers 11 bzw. Deckels kommt es zu keiner flächigen Beschädigung der Oberfläche (Aufwölbungs-Außenfläche 58) des Verschlusskörpers 11 mehr. Es entsteht lediglich eine präzise, exakt begrenzte und vergleichsweise schmale Schweißnahtmarkierung an der Oberfläche (Aufwölbungs-Außenfläche 58) des Verschlusskörpers. Die vor dem Ultraschallverscheißen in der zweiten Richtung 36 emporstehende Aufwölbung 40 des Verschlusskörpers 11 bzw. Deckels ist nach dem Ultraschallverscheißen im Wesentlichen eben bzw. im Wesentlichen planeben. Erfindungsgemäß wird ein sicheres Verschweißen bei beschädigungsarmer bzw. kontrollierter Oberflächenmarkierung erreicht.

Die Erfindung betrifft auch ein Verfahren zum Verschweißen eines Behälters 13 und eines Verschlusskörpers 11 bzw. Deckels zum Verschließen einer Behälteröffnung 21 des Behälters 13 mittels Ultraschall (Ultraschallschwingungen) zu einer Verpackung 17, wobei ausgehend von der erfindungsgemäßen Anordnung 20, die folgenden Schritte durchgeführt werden:
a) falls noch nicht geschehen, Anlegen des um das Verpackungskörper-Zentrum 24 des Verpackungskörpers 12 bzw. des Verschlusskörpers 11 umlaufenden, ringförmigen Verpackungskörperteils 26, insbesondere Verpackungskörperrands, des Verpackungskörpers 12 bzw. Verschlusskörpers 11 und eines um ein weiteres Verpackungskörper-Zentrum 25 des weiteren Verpackungskörpers 14 bzw. Behälters 13 umlaufenden, geschlossenen bzw. durchgehenden, ringförmigen, weiteren Verpackungskörperteils 38, insbesondere weiteren Verpackungskörperrands, des weiteren Verpackungskörpers 14 bzw. Behälters 13 unmittelbar aneinander derart, dass der als Energieübertragungskörper 40 ausgebildete Vorsprung des Verpackungskörpers 12 bzw. des Verschlusskörpers 11 mit seiner auch als Vorsprungs-Kante bezeichneten ringförmigen Anlagekante 33 in der ersten Richtung 35 auf eine weitere Verpackungskörperteil-Fläche 39 des weiteren Verpackungskörperteils 38, insbesondere des weiteren Verpackungskörperrands, des weiteren Verpackungskörpers 14 bzw. Behälters 13 vorsteht,
b) wobei oder wonach eine ringförmige Sonotrode 15 an oder auf der Aufwölbungs-Außenseite 41 unmittelbar an dem in der zweiten Richtung 36 vorstehenden freien Aufwölbungsende 44 der Aufwölbung 40 bzw. unmittelbar an der Aufwölbung 40 des Verpackungskörpers 12 angelegt bzw. aufgesetzt wird,
c) wobei oder wonach mittels der Sonotrode 15 Ultraschallwellen auf und in die Aufwölbung 40 sowie über die Aufwölbung 40 in den Energieübertragungskörper 30 derart eingeleitet werden, dass der Energieübertragungskörper 30 aufschmilzt,
d) wobei vor dem Schritt c), während des Schritts c) oder nach dem Schritt c) die Sonotrode 15 unter Ausübung einer Druckkraft 57 in der ersten Richtung 35, auf der Aufwölbungs-Außenseite 41, unmittelbar auf das in der zweiten Richtung 36 vorstehende freie Aufwölbungsende 44 der Aufwölbung 40 bzw. unmittelbar auf die Aufwölbung 40 gedrückt bzw. gepresst wird, so dass der ringförmige Verpackungskörperteil 26, insbesondere der Verpackungskörperrand, des Verpackungskörpers 12 bzw. Verschlussköpers 11 und der ringförmige weitere Verpackungskörperteil 38, insbesondere der weitere Verpackungskörperrand, des weiteren Verpackungskörpers 14 bzw. Behäl-ters 13 unter Ausbildung einer Siegelverbindung 22 derart miteinander verbunden bzw. verschweißt werden, dass der weitere Verpackungskörper 14 bzw. Behälter 13 mittels des Verpackungskörpers 12 bzw. Verschlusskörpers 11 bzw. Deckels gegen ein Austreten eines sich in dem weiteren Verpackungskörper 14 bzw. Behälter 13 befindlichen Produkts aus dem weiteren Verpackungskörper 14 bzw. Behälter und/oder gegen einen Zutritt von Stoffen wie Flüssigkeiten, insbesondere Wasser, und/oder Gasen, insbesondere Luft, in den weiteren Verpackungskröper 14 bzw. Behälter 13, vorzugsweise hermetisch, dicht, insbesondere steril, vorzugsweise wieder lösbar, verschlossen ist.

Durch die punktuelle Kraft- und Schwingungseinleitung schmilzt der Energieübertragungskörper 30 bzw. der Energierichtungsgeber (ERG) an der an seinem freien Ende 32 ausgebildeten und um das Verpackungskörper-Zentrum 24 umlaufenden Kante 33 auf und die dabei entstehende Schmelze wird von dem Energieübertragungskörper 30 weg, sowohl zu dem Verpackungskörper-Zentrum 24 hin als auch von dem Verpackungskörper-Zentrum 24 weg gequetscht. Durch das Abschmelzen des Energieübertragungskörpers 30 wird mittels der Sonotrode 15 der Verschlusskörper-Rand 26 des Verschlusskörpers 12 bzw. Deckels in der ersten Richtung 35 bzw. nach unten gepresst und die schrägen sowie konkaven Aufwölbungs-Innenflächen 43.1, 43.2 der Aufwölbung 40 drücken die Schmelze wieder in Richtung des Zentrums 37 der Energieübertragungskörpers 30. Dadurch bleibt die Schmelze und die Wärmeenergie in dem Zentrum 37 und das sorgt für eine präzise Schweißnaht. Durch die Linienanlage der Sonotrode 15 an der ringförmigen Aufwölbung 40 kommt es zu keiner flächigen Beschädigung der Oberfläche (Aufwölbungs-Außenfläche 58) des Verschlusskörpers 11 mehr. Es entsteht lediglich eine präzise, exakt begrenzte Schweißmarkierung auf dem Niveau der Oberfläche (Aufwölbungs-Außenfläche 58) des Verschlusskörpers 11. Die vor dem Ultraschall-Verschweißen in der zweiten Richtung 36 bzw. nach außen vor- bzw. hochstehende Aufwölbung 40 ist nach dem Ultraschall-Verschweißen im Wesentlichen eben bzw. im Wesentlichen planeben.

Die Erfindung ist nicht auf das in den Figuren gezeigte vorteilhafte Ausführungsbeispiel beschränkt. Das vorstehend beschriebene Ausführungsbeispiel kann auch anders als in den beispielhaften Figuren implementiert sein. Die in der Figurenbeschreibung und in den nachfolgenden Ansprüchen verwendeten Bezugszeichen schränken den Schutzumfang der Erfindung nicht ein.

### Bezugszeichenliste

- 10: Vorrichtung
- 11: Verschlusskörper / Deckel
- 12: Verpackungskörper
- 13: Behälter
- 14: weiterer Verpackungskörper
- 15: Sonotrode
- 16: Werkstückaufnahme / Maske
- 17: Verpackung
- 18: Zentralachse
- 20: Anordnung
- 21: Behälteröffnung (von 13)
- 22: Siegelverbindung
- 23: Schweißnaht / Schmelznaht
- 24: Verpackungskörper-Zentrum (von 12)
- 25: weiteres Verpackungskörper-Zentrum (von 14)
- 26: Verpackungskörperteil / Verpackungskörperrand
- 27: Verpackungskörperteil-Außenseite
- 28: Verpackungskörperteil-Innenseite
- 29: Verpackungskörperteil-Innenflächen
- 30: Vorsprung / Energieübertragungskörper / Energierichtungsgeber (ERG)
- 31: Verpackungskörper-Wandteil
- 32: freies Vorsprungs-Ende / freies Ende (von 30)
- 33: Vorsprungs-Kante / Kante / Anlagekante
- 34: linienförmiger erster Anlagekontakt / punktförmiger erster Anlagekontakt
- 35: erste Richtung (nach innen bzw. nach unten)
- 36: zweite Richtung (nach außen bzw. nach oben)
- 37: Zentrum (von 30)
- 38: weiterer Verpackungskörperteil / weiterer Verpackungskörperrand / Behälterrand
- 39: weitere Verpackungskörperteil-Fläche (von 14; 38)
- 40: Aufwölbung
- 41: Aufwölbungs-Außenseite / Aufwölbungs-Oberseite
- 42: Aufwölbungs-Innenseite / Aufwölbungs-Unterseite
- 43.1: schräge und konkave Aufwölbungs-Innenfläche
- 43.2: schräge und konkave Aufwölbungs-Innenfläche
- 44: freies Aufwölbungs-Ende
- 45: Aufwölbungs-Hohlraum
- 45.1: Aufwölbungs-Hohlraum
- 45.2: Aufwölbungs-Hohlraum
- 46: linienförmiger zweiter Anlagekontakt / punktförmiger zweiter Anlagekontakt
- 47.1: erste Seite (von 30)
- 47.2: zweite Seite (von 30)
- 48.1: erste Anlagefläche
- 48.2: zweite Anlagefläche
- 49: Verpackungskörperteil-Außenfläche
- 50: Anlageflächen-Ebene
- 53.1: erste Dünnstelle
- 53.2: zweite Dünnstelle
- 56: Füge-Anordnung
- 57: Druckkraft
- 58: (konvexe) Aufwölbungs-Außenfläche
- 60: Teilbereich (von 38)
- 111: Verschlusskörper /Deckel
- 126: Verschlusskörperrand / Behälterrand (von 111)
- 127: Innenseite / Unterseite (von 111)
- 128: Außenseite / Oberseite (von 111)
- 129: Innenflächen (von 111)
- 130: Energieübertragungskörper
- 133: Anlagekante (von 130)
- 149: Außenfläche
- 156: Füge-Anordnung
- 159.1: erster Ringspalt
- 159.2: zweiter Ringspalt
- 160: Teilbereich (von 38)

## Patentansprüche

1. Verpackungskörper (12) für eine Verpackung (17), der aus einem themoplastischen Kunststoff besteht und der
entweder
als ein Verschlusskörper (11) für die Verpackung (17) zum Verschließen einer Behälteröffnung (21) eines Behälters (13) für die Verpackung (17) zur Aufnahme von festen, pastösen, fließ- und/oder schöpffähigen Produkten ausgebildet ist, der dazu konfiguriert ist, mit dem Behälter (13) mittels Ultraschall unter Ausbildung einer Siegelverbindung (22) derart verschweißt zu werden, dass der Behälter (13) mittels des Verschlusskörpers (11) gegen ein Austreten eines sich in dem Behälter (13) befindlichen Produkts aus dem Behälter (13) und/oder gegen einen Zutritt von Stoffen in den Behälter (13) dicht, vorzugsweise wieder lösbar, verschlossen ist,
oder
als ein Behälter (13) für die Verpackung (17) zur Aufnahme von festen, pastösen, fließ- und/oder schöpffähigen Produkten ausgebildet ist, der eine Behälteröffnung (21) aufweist und der dazu konfiguriert ist, mit einem Verschlusskörper (11) mittels Ultraschall unter Ausbildung einer Siegelverbindung (22) derart verschweißt zu werden, dass der Behälter (13) mittels des Verschlusskörpers (11) gegen ein Austreten eines sich in dem Behälter (13) befindlichen Produkts aus dem Behälter (13) und/oder gegen einen Zutritt von Stoffen in den Behälter (13) dicht, vorzugsweise wieder lösbar, verschlossen ist,
wobei der Verpackungskörper (12) einen um ein Verpackungskörper-Zentrum (24) des Verpackungskörpers (12) umlaufenden, ringförmigen Verpackungskörperteil (26) aufweist, der eine Verpackungskörperteil-Außenseite (27) und eine Verpackungskörperteil-Innenseite (28) aufweist, die mit Verpackungskörperteil-Innenflächen (29) begrenzt ist,
und wobei der Verpackungskörperteil (26) einen um das Verpackungskörper-Zentrum (24) umlaufenden, ringförmigen Vorsprung (30) aufweist,
der über einen um das Verpackungskörper-Zentrum (24) umlaufenden, ringförmigen Verpackungskörper-Wandteil (31) des Verpackungskörperteils (26) vorsteht,
und der sich in einer ersten Richtung (35) von Verpackungskörperteil-Innenflächen der Verpackungskörperteil-Innenflächen (29) weg bis zu einem freien Vorsprungs-Ende (33) erstreckt, das als eine um das Verpackungskörper-Zentrum (24) umlaufende, ringförmige Vorsprungs-Kante (33) ausgebildet ist,
und der als ein Energieübertragungskörper (30) ausgebildet ist,
und der dazu konfiguriert ist, mit einem weiteren Verpackungskörper (14) für die Verpackung (17) einen linienförmigen ersten Anlagekontakt (34) zum Verschweißen des Verpackungskörpers (12) mittels Ultraschall mit dem weiteren Verpackungskörper (14) auszubilden,
**dadurch gekennzeichnet,**
**dass** der um das Verpackungskörper-Zentrum (24) umlaufende, ringförmige Verpackungskörperteil (26) des Verpackungskörpers (12) eine den Verpackungskörper-Wandteil (31) enthaltende, sich in einer zweiten Richtung (36) erstreckende, um das Verpackungskörper-Zentrum (24) umlaufende, ringförmige Aufwölbung (40) aufweist, die eine Aufwölbungs-Außenseite (41) und eine Aufwölbungs-Innenseite (42) mit Aufwölbungs-Innenflächen (43.1, 43.2) der Verpackungskörper-Innenflächen (29) aufweist, die einen um das Verpackungskörper-Zentrum (24) umlaufenden, ringförmigen Aufwölbungs-Hohlraum (45; 45.1, 45.2) begrenzt, und die dazu konfiguriert ist, mit einer auf der Aufwölbungs-Außenseite (41) der Aufwölbung (45) anglegbaren Sonotrode (15) einen linienförmigen zweiten Anlagekontakt (46) zum Verschweißen des Verpackungskörpers (12) mittels Ultraschall mit dem weiteren Verpackungskörper (14) auszubilden, und wobei der Energieübertragungskörper (30) auf der Aufwölbungs-Innenseite (42) der Aufwölbung (45) angeordnet ist und den Aufwölbungs-Hohlraum (45; 45.1, 45.2) der Aufwölbung (45) begrenzt.

2. Verpackungskörper nach Anspruch 1, **dadurch gekennzeichnet, dass** der Aufwölbung-Hohlraum (45; 45.1, 45.2) der Aufwölbung (40) auf einer ersten Seite (47.1) des Energieübertragungskörpers (30) von einer um das Verpackungskörper-Zentrum (24) umlaufenden ringförmigen ersten Anlagefläche (48.1) des Verpackungskörperteils (26) begrenzt ist und auf einer von der ersten Seite (47.1) wegweisenden zweiten Seite (47.2) des Energieübertragungskörpers (30) von einer um das Verpackungskörper-Zentrum (24) umlaufenden ringförmigen zweiten Anlagefläche (48.2) des Verpackungskörperteils (26) begrenzt ist, die in einer gemeinsamen Anlageflächen-Ebene (50) angeordnet sind, und dass der Energieübertragungskörper (30) in der ersten Richtung (35) über die Aufwölbungs-Innenflächen (43.1, 43.2) maximal bis zu der Anlageflächen-Ebene (50) vorsteht.

3. Verpackungskörper nach Anspruch 1 oder 2, **dadurch gekennzeichnet, dass** der Energieübertragungskörper (30) vollständig innerhalb des durch die Aufwölbung (40) begrenzten Aufwölbungs-Hohlraums (45; 45.12, 45.2) angeordnet ist.

4. Verpackungskörper nach einem der vorstehenden Ansprüche, dadurch gekannzeichnet, dass der Aufwölbungs-Hohlraum (45; 45.1, 45.2) der Aufwölbung (40) ein Hohlraum-Volumen aufweist, das gleich groß oder größer ist wie ein Vorsprungs-Volumen des Energieübertragungskörpers (30), das dieser, in der ersten Richtung (35) betrachtet, ausgehend von der den Energieübertragungskörper (30) innerhalb des Aufwölbungs-Hohlraums (45; 45.1, 45.2) seitlich begrenzenden Aufwölbungs-Innenflächen (43.1, 43.2) bis zu dem freien Vorsprungs-Ende (32) aufweist.

5. Verpackungskörper nach einem der vorstehenden Ansprüche, **dadurch gekennzeichnet, dass** die den Energieübertragungskörper (30) innerhalb des Aufwölbungs-Hohlraums (45; 45.1, 45.2) der Aufwölbung (40) seitlich begrenzenden Aufwölbungs-Innenflächen (43.1, 43.2) schräg und/oder konkav ausgebildet sind.

6. Verpackungskörper nach einem der vorstehenden Ansprüche, **dadurch gekennzeichnet, dass** die Aufwölbung (40) in einem an den Energieübertragungskörper (30) angrenzenden Bereich des Verpackungskörper-Wandteils (31) des Verpackungskörperteils (26) auf einer ersten Seite (47.1) des Energieübertragungskörpers (30) oder auf der ersten Seite (47.1) des Energieübertragungskörpers (30) eine um das Verpackungskörper-Zentrum (24) umlaufende, ringförmige, erste Dünnstelle (53.1) aufweist, die von einer ringförmigen, ersten Innenfläche der Aufwölbungs-Innenflächen (43.1, 43.2) begrenzt ist und auf einer von der ersten Seite (47.1) wegweisenden zweiten Seite (47.2) des Energieübertragungskörpers (30) oder auf der von der ersten Seite (47.1) wegweisenden zweiten Seite (47.2) des Energieübertragungskörpers (30) eine um das Verpackungskörper-Zentrum (24) umlaufende, ringförmige, zweite Dünnstelle (53.2) aufweist, die von einer ringförmigen, zweiten Innenfläche der Aufwölbungs-Innenflächen (43.1, 43.2) begrenzt ist.

7. Anordnung des Verpackungskörpers (12) nach einem der vorstehenden Ansprüche und eines weiteren Verpackungskörpers (14) aus einem thermoplastischen Kunststoff oder aus dem thermoplastischen Kunststoff des Verpackungskörpers (12), bei denen es sich um einen Behälter (13) zur Aufnahme von festen, pastösen, fließ- und/oder schöpffähigen Produkten und um einen Verschlusskörper (11) zum Verschließen einer Behälteröffnung (21) des Behälters (13) handelt, wobei der Behälter (13) und der Verschlusskörper (11) dazu konfiguriert sind, mittels Ultraschall unter Ausbildung einer Siegelverbindung (22) derart verschweißt zu werden, dass der Behälter (13) mittels des Verschlusskörpers (11) gegen ein Austreten eines sich in dem Behälter (13) befindlichen Produkts aus dem Behälter (13) und/oder gegen einen Zutritt von Stoffen in den Behälter (13) dicht, vorzugsweise wieder lösbar, verschlossen ist.

8. Verfahren zum Verschweißen eines Behälters (13) und eines Verschlusskörpers (11) zum Verschließen einer Behälteröffnung (21) des Behälters (13) mittels Ultraschall zu einer Verpackung (17),
**dadurch gekennzeichnet:**
**dass** ausgehend von der Anordnung (20) nach Anspruch 7, die folgenden Schritte durchgeführt werden:
a) falls noch nicht geschehen, Anlegen des um das Verpackungskörper-Zentrum (24) des Verpackungskörpers (12), der entweder als ein Verschlusskörper (11) oder als ein Behälter (13) ausgebildet ist, umlaufenden, ringförmigen Verpackungskörperteils (26) des Verpackungskörpers (12) und eines um ein weiteres Verpackungskörper-Zentrum (25) des weiteren Verpackungskörpers (14) umlaufenden, ringförmigen, weiteren Verpackungskörperteils (38) des weiteren Verpackungskörpers (14) aneinander derart, dass der als Energieübertragungskörper ausgebildete Vorsprung (30) des Verpackungskörpers (12) mit seiner ringförmigen Vorsprungs-Kante (33) in der ersten Richtung (35) auf eine weitere Verpackungskörperteil-Fläche (39) des weiteren Verpackungskörperteils (38) des weiteren Verpackungskörpers (14) vorsteht,
b) wobei oder wonach eine ringförmige Sonotrode (15) auf der Aufwölbungs-Außenseite (41) an der Aufwölbung (40) des Verpackungskörpers (12) angelegt wird,
c) wobei oder wonach mittels der Sonotrode (15) Ultraschallwellen auf und in die Aufwölbung (40) sowie über die Aufwölbung (40) in den Energieübertragungskörper (30) derart eingeleitet werden, dass der Energieübertragungskörper (30) aufschmilzt,
d) wobei vor dem Schritt c), während des Schritts c) oder nach dem Schritt c) die Sonotrode (15) unter Ausübung einer Druckkraft (57) in der ersten Richtung (35) auf die Aufwölbung (40) gedrückt wird, so dass der ringförmige Verpackungskörperteil (26) des Verpackungskörpers (12) und der ringförmige weitere Verpackungskörperteil (38) des weiteren Verpackungskörpers (14) unter Ausbildung einer Siegelverbindung (22) derart miteinander verschweißt werden, dass der Behälter (13) mittels des Verschlusskörpers (11) gegen ein Austreten eines sich in dem Behälter (13) befindlichen Produkts aus dem Behälter (13) und/oder gegen einen Zutritt von Stoffen in den Behälter (13), vorzugsweise wieder lösbar, verschlossen ist.

9. Verfahren nach Anspruch 8, **dadurch gekennzeichnet, dass** mittels der Sonotrode (15)
zuerst die erste ringförmige Anlagefläche (48.1) des Verpackungskörperteils (26) und die zweite ringförmige Anlagefläche (48.2) des Verpackungskörperteils (26) des Verpackungskörpers (12) unter Ausübung einer Druckkraft (57) in der ersten Richtung (35) auf die Aufwölbung (40) auf den ringförmigen weiteren Verpackungskörperteil (38) des weiteren Verpackungskörpers (14) gedrückt werden und erst anschließend der Energieübertragungskörper (30) des Verpackungskörpers (12) unter fortgesetzter Ausübung einer Druckkraft (57) in der ersten Richtung (35) auf die Aufwölbung (40) auf den ringförmigen weiteren Verpackungskörperteil (38) des weiteren Verpackungskörpers (14) gedrückt wird.

## Claims

1. Packaging body (12) for package (17) which is made from a thermoplastic material and
either
constructed as a closure body (11) for the package (17) for closing a container opening (21) of a container (13) for the package (17) designed to hold solid, pasty, flowable and/or scoopable products, which closure body is configured to be welded ultrasonically to the container (13), forming a sealed joint (22), in such a way that the container (13) is closed tightly by means of the closure body (11), preferably detachably again, to prevent a product contained in the container (13) from leaking out of the container (13) and/or to prevent substances from getting into the container (13),
or
constructed as a container (13) for the package (17) designed to hold solid, pasty, flowable and/or scoopable products, which container has a container opening (21) and is configured to be welded ultrasonically to a closure body (11), forming a sealed joint (22), in such a way that the container (13) is closed tightly by means of the closure body (11), preferably detachably again, to prevent a product contained in the container (13) from leaking out of the container (13) and/or to prevent substances from getting into the container (13),
wherein the packaging body (12) has an annular packaging body part (26) surrounding a packaging body centre (24) of the packaging body (12), which body part has a packaging body part outer side (27) and a packaging body part inner side (28), which is delimited by packaging body part inner surfaces (29),
and wherein the packaging body part (26) has an annular protrusion (30) that surrounds the packaging body centre (24),
which projects over a ring-shaped packaging body wall element (31) of the packaging body part (26) surrounding the packaging body centre (24),
and which extends in a first direction (35) away from packaging body part inner surfaces of the packaging body part inner surfaces (29) to a free protrusion end (32), which is designed as an annular protrusion edge (33) surrounding the packaging body centre (24),
and which is designed as an energy transfer body (30),
and which is configured to form a linear first bearing contact (34) with a further packaging body (14) for the package (17) for the purpose of welding the packaging body (12) ultrasonically to the further packaging body (14),
**characterized in that**
the annular packaging body part (26) of the packaging body (12) that surrounds the packaging body centre (24) has an annular bulge (40) surrounding the packaging body centre (24) and containing the packaging body wall element (31) and extending in a second direction, which has a bulge outer side (41) and a bulge inner side (42) with bulge inner surfaces (43.1, 43.2) of the packaging body inner surfaces (29) that delimits an annular bulge cavity (45; 45.1, 45.2) that surrounds the packaging body centre (24) and is configured to form a linear second bearing contact (34) with a sonotrode (15) that can be attached to the bulge outer side (41) of the bulge (40) for the purpose of ultrasonically welding the packaging body (12) to the further packaging body (14), and wherein the energy transfer body (30) is arranged on the bulge inner side (42) of the bulge (40) and delimits the bulge cavity (45; 45.1, 45.2) of the bulge (40).

2. Packaging body according to Claim 1, **characterized in that** the bulge cavity (45; 45.1, 45.2) of the bulge (40) is delimited on a first side (47.1) of the energy transfer body (30) by an annular first bearing surface (48.1) of the packaging body part (26) that surrounds the packaging body centre (24), and on a second side (47.2) of the energy transfer body (30) facing away from the first side (47.1) by an annular second bearing surface (48.2) of the packaging body part (26) that surrounds the packaging body-centre (24), which are arranged in a common bearing surface plane (50), and that the energy transfer body (30) protrudes above the bulge inner surfaces (43.1, 43.2) in the first direction (35) not further than the bearing surface plane (50).

3. Packaging body according to Claim 1 or 2, **characterized in that** the energy transfer body (30) is arranged entirely inside the bulge cavity (45; 45.12, 45.2) delimited by the bulge (40).

4. Packaging body according to any one of the preceding claims, **characterized in that** the bulge cavity (45; 45.1, 45.2) of the bulge (40) has a hollow volume which is the same size or larger than a protrusion volume of the energy transfer body (30) which said transfer body has, viewed in the first direction (35), originating from the bulge inner surfaces (43.1, 43.2) that delimit the energy transfer body (30) laterally inside the bulge cavity (45; 45.1, 45.2) as far as the free protrusion end (32).

5. Packaging body according to any one of the preceding claims, **characterized in that** the bulge inner surfaces (43.1, 43.2) that delimit the energy transfer body (30) laterally inside the bulge cavity (45; 45.1, 45.2) of the bulge (40) are designed to be slanting and/or concave.

6. Packaging body according to any one of the preceding claims, **characterized in that** the bulge (40) has a first annular thin spot (53.1) that surrounds the packaging body centre (24) on a first side (47.1) of the energy transfer body (30) or on the first side (47.1) of the energy transfer body (30) in a region of the packaging body wall element (31) of the packaging body part (26) adjacent to the energy transfer body (30), which thin spot is delimited by an annular first inner surface of the bulge inner surfaces (43.1, 43.2), and has a second annular thin spot (53.2) that surrounds the packaging body centre (24) on a second side (47.2) of the energy transfer body (30) facing away from the first side (47.1) or on the second side (47.2) of the energy transfer body (30) facing away from the first side (47.1), which is delimited by an annular second inner surface of the bulge inner surfaces (43.1, 43.2).

7. Arrangement of the packaging body (12) according to any one of the preceding claims and a further packaging body (14) made from a thermoplastic material or from the thermoplastic material of the packaging body (12), being a container (13) for holding solid, pasty, flowable and/or scoopable products, and a closure body (11) for closing a container opening (21) of the container (13), wherein the container (13) and the closure body (11) are configured to be welded together ultrasonically to form a sealed joint (22), in such a way that the container (13) is closed tightly by means of the closure body (11), preferably detachably again, to prevent a product contained in the container (13) from leaking out of the container (13) and/or to prevent substances from getting into the container (13).

8. Method for welding a container (13) and a closure body (11) for closing a container opening (21) of the container (13) ultrasonically to form a package (17),
**characterized in that**
the following steps are performed starting from the arrangement (20) according to Claim 7:
a) if not already done, positioning the annular packaging body part (26) of the packaging body (12) that surrounds the packaging body centre (24) of the packaging body (12), which is designed either as a closure body (11) or as a container (13), and an annular further packaging body part (38) of the further packaging body (14) that surrounds a further packaging body centre (25) of the further packaging body (14) against one another in such manner that the protrusion (30) of the packaging body (12) embodied as energy transfer body protrudes with its annular protrusion edge (33) in the first direction (35) against a further packaging body part surface (39) of the further packaging body part (38) of the further packaging body (14),
b) during or after which an annular sonotrode (15) is placed against the bulge outer side (41) on the bulge (40) of the packaging body (12),
c) during or after which ultrasound waves are introduced by means of the sonotrode (15) onto and into the bulge (40) and via the bulge (40) into the energy transfer body (30) in such a way that the energy transfer body (30) fuses,
d) wherein before step c), during step c) or after step c) the sonotrode (15) is pressed against the bulge (40), exerting a pressing force (57) in the first direction (35), so that the annular packaging body part (26) of the packaging body (12) and the annular further packaging body part (38) of the further packaging body (14) are welded together, forming a sealed joint (22) in such manner that the container (13) is sealed by means of the closure body (11), preferably detachably again, to prevent a product contained in the container (13) from leaking out of the container (13) and/or to prevent substances from getting into the container (13).

9. Method according to Claim 8, **characterized in that** by means of the sonotrode (15)
first the first annular bearing surface (48.1) of the packaging body part (26) and the second annular bearing surface (48.2) of the packaging body part (26) of the packaging body (12) are pressed against the annular further packaging body part (38) of the further packaging body (14), exerting a pressing force (57) in the first direction (35) against the bulge (40)
and only afterwards the energy transfer body (30) of the packaging body (12) is pressed against the annular further packaging body part (38) of the further packaging body (14), with continued exertion of a pressing force (57) in the first direction (35) against the bulge (40).

## Revendications

1. Corps d'emballage (12) pour un emballage (17) qui est constitué d'une matière thermoplastique et qui est
soit
conçu sous la forme d'un corps de fermeture (11) pour l'emballage (17), destiné à fermer une ouverture (21) de récipient d'un récipient (13) pour l'emballage (17), pour recevoir des produits solides, pâteux, fluides et/ou liquides, qui est configuré pour être soudé par ultrasons avec le récipient (13) en créant un joint de scellage (22), de manière à ce que le récipient (13) soit fermé hermétiquement, de préférence de manière à nouveau dissociable au moyen du corps de fermeture (11), pour éviter une fuite hors du récipient (13) d'un produit contenu dans le récipient (13) et/ou une pénétration de substances dans le récipient (13),
ou
sous la forme d'un récipient (13) pour l'emballage (17) destiné à recevoir des produits solides, pâteux, fluides et/ou liquides, qui présente une ouverture (21) de récipient et qui est configuré pour être soudé par ultrasons avec un corps de fermeture (11), en créant un joint de scellage (22), de manière à ce que le récipient (13) soit fermé hermétiquement, de préférence de manière à nouveau dissociable au moyen du corps de fermeture (11), pour éviter une fuite hors du récipient (13) d'un produit contenu dans le récipient (13) et/ou la pénétration de substances dans le récipient (13),
le corps d'emballage (12) comportant une partie (26) de corps d'emballage de forme annulaire, périphérique autour d'un centre (24) de corps d'emballage du corps d'emballage (12), qui comporte une face extérieure (27) de corps d'emballage et une face intérieure (28) de corps d'emballage qui est délimitée par des surfaces intérieures (29) de partie de corps d'emballage,
et la partie (26) de corps d'emballage comportant une saillie (30) de forme annulaire, périphérique autour du centre (24) de corps d'emballage,
qui fait saillie par-dessus une partie de paroi (31) de corps d'emballage de forme annulaire du corps d'emballage (26), périphérique autour du centre (24) de corps d'emballage,
et qui s'étend dans un premier sens (35), en éloignement de surfaces intérieures de partie de corps d'emballage des surfaces intérieures (29) de partie de corps d'emballage jusqu'à une extrémité de saillie (32) libre, qui est conçue sous la forme d'une arête de saillie (33) de forme annulaire, périphérique autour du centre (24) de corps d'emballage,
et qui est conçue sous la forme d'un corps de transfert d'énergie (30)
et qui est configurée pour établir, avec un autre corps d'emballage (14) pour l'emballage (17), un premier contact d'appui (34) de forme linéaire, pour le soudage par ultrasons du corps d'emballage (12) avec l'autre corps d'emballage (14),
**caractérisé en ce que**
la partie (26) de corps d'emballage de forme annulaire du corps d'emballage (12) périphérique autour du centre (24) de corps d'emballage (24) comporte un bombement (40) de forme annulaire, périphérique autour du centre (24) de corps d'emballage et contenant la partie de paroi (31) de corps d'emballage et s'étendant dans un second sens (36), qui comporte une face extérieure (41) de bombement et une face intérieure (42) de bombement avec des surfaces intérieures (43.1, 43.2) de bombement des surfaces intérieures (29) de corps d'emballage, qui délimite une cavité (45 ; 45.1, 45.2) de bombement de forme annulaire, périphérique autour du centre (24) de corps d'emballage et qui est configurée pour établir avec une sonotrode (15) applicable sur la face extérieure (41) du bombement (40) un second contact d'appui (46) de forme linéaire, destiné au soudage par ultrasons avec l'autre corps d'emballage (14), et le corps de transfert d'énergie (30) étant placé sur la face intérieure (42) de bombement du bombement (40) et délimitant la cavité (45 ; 45.1, 45.2) de bombement du bombement (45).

2. Corps d'emballage selon la revendication 1, **caractérisé en ce que** la cavité (45 ; 45.1, 45.2) de bombement du bombement (40) est délimitée (47.1) sur une première face (47.1) du corps de transfert d'énergie (30) par une première surface d'appui (48.1) de la partie de corps d'emballage (26), de forme annulaire, périphérique autour du centre (24) de corps d'emballage et sur une seconde face (47.2) montrant en éloignement de la première face (47.1) du corps de transfert d'énergie (30), est délimitée par une seconde surface d'appui (48.2) de la partie (26) de corps d'emballage, de forme annulaire, périphérique autour du centre (24) de corps d'emballage (26) qui sont disposées dans un plan (50) de surfaces d'appui commun et **en ce que** le corps de transfert d'énergie (30) déborde dans le premier sens (35) au-delà des surfaces intérieures (43.1, 43.2) de bombement, au maximum jusqu'au plan (50) de surfaces d'appui.

3. Corps d'emballage selon la revendication 1 ou 2, **caractérisé en ce que** le corps de transmission d'énergie (30) est entièrement placé à l'intérieur de la cavité (45 ; 45.12, 45.2) de bombement, délimitée par le bombement (40).

4. Corps d'emballage selon l'une des revendications précédentes, **caractérisé en ce que** la cavité (45 ; 45.1, 45.2) de bombement du bombement (40) comporte un volume de cavité qui est supérieur ou égal à un volume de saillie du corps de transfert d'énergie (30) que celui-ci comporte, considéré dans le premier sens (35), en partant des surfaces intérieures (43.1, 43.2) de bombement délimitant latéralement le corps de transfert d'énergie (30) à l'intérieur de la cavité (45 ; 45.1, 45.2) de bombement jusqu'à l'extrémité de saillie (32) libre.

5. Corps d'emballage selon l'une des revendications précédentes, **caractérisé en ce que** les surfaces intérieures (43.1, 43.2) de bombement délimitant latéralement le corps de transfert d'énergie (30) à l'intérieur de la cavité (45 ; 45.1, 45.2) de bombement du bombement (40) sont conçues sous forme oblique et/ou concave.

6. Corps d'emballage selon l'une des revendications précédentes, **caractérisé en ce que** le bombement (40) comporte, dans une zone adjacente au corps de transfert d'énergie (30) de la partie de paroi (31) de corps d'emballage de la partie (26) de corps d'emballage, sur une première face (47.1) du corps de transfert d'énergie (30) ou sur la première face (47.1) du corps de transfert d'énergie (30), une première zone mince (53.1) de forme annulaire, périphérique autour du centre (24) de corps d'emballage, qui est délimitée par une première surface intérieure annulaire des surfaces intérieures (43.1, 43.2) de bombement et sur une seconde face (47.2) du corps de transfert d'énergie (30) montrant en éloignement de la première face (47.1) ou sur la seconde face (47.2) du corps de transfert d'énergie (30) montrant en éloignement de la première face (47.1) comporte une seconde zone mince (53.2) de forme annulaire, périphérique autour du centre (24) de corps d'emballage, qui est délimitée par une seconde surface intérieure de forme annulaire des surfaces intérieures (43.1, 43.2) de bombement.

7. Ensemble constitué du corps d'emballage (12) selon l'une des revendications précédentes et d'un autre corps d'emballage (14) en une matière thermoplastique ou en la matière thermoplastique du corps d'emballage (12), pour lesquels il s'agit d'un récipient (13) destiné à contenir des produits solides, pâteux, fluides et/ou liquides et d'un corps de fermeture (11) destiné à fermer une ouverture (21) de récipient du récipient (13), le récipient (13) et le corps de fermeture (11) étant configurés pour être soudés par ultrasons en créant un joint de scellage (22) de manière à ce que le récipient (13) soit fermé hermétiquement et de préférence, de manière à nouveau dissociable au moyen du corps de fermeture (11) pour éviter la fuite hors du récipient (13) d'un produit contenu dans le récipient (13) et/ou pour éviter la pénétration de substances dans le récipient (13).

8. Procédé destiné à souder un récipient (13) et un corps de fermeture (11) pour fermer par ultrasons une ouverture (21) de récipient du récipient (13) afin d'obtenir un emballage (17), **caractérisé en ce que** :
en partant de l'ensemble (20) selon la revendication 7, sont réalisées les étapes suivantes, consistant à :
a) si ce n'est pas déjà fait, appliquer l'une contre l'autre la partie (26) de corps d'emballage de forme annulaire du corps d'emballage (12), périphérique autour du centre (24) de corps d'emballage du corps d'emballage (12) qui est conçue soit sous la forme d'un corps de fermeture (11) ou d'un récipient (13) et une autre partie (38) de corps d'emballage de l'autre corps d'emballage (14) périphérique autour d'un autre centre (25) de corps d'emballage de l'autre corps d'emballage (14), de manière à ce que la saillie (30) du corps d'emballage (12) conçue sous la forme d'un corps de transfert d'énergie, déborde par son arête de saillie (33) de forme annulaire dans le premier sens (35) sur une autre surface (39) de corps d'emballage de l'autre partie (38) de corps d'emballage de l'autre corps d'emballage (14),
b) à cet effet ou après quoi, une sonotrode annulaire (15) étant appliquée sur la face extérieure (41) de bombement, contre le bombement (40) du corps d'emballage (12) ;
c) à cet effet ou après quoi, au moyen de la sonotrode (15), des ondes ultrasonores étant introduites sur et dans le bombement (40) et par l'intermédiaire du bombement (40), dans le corps de transmission d'énergie (30) de manière à ce que le corps de transmission d'énergie (30) fonde ;
d) avant l'étape c), pendant l'étape c) ou après l'étape c), la sonotrode (15) étant pressée sur la bombement (40) en exerçant une force de pression (57) dans le premier sens (35), de manière à ce que la partie (26) de corps d'emballage de forme annulaire du corps d'emballage (12) et que l'autre partie (38) de corps d'emballage de forme annulaire de l'autre corps d'emballage (14) soient soudées l'une avec l'autre, en créant un joint d'étanchéité (22) de manière à ce que le récipient (13) soit fermé de préférence de manière à nouveau dissociable au moyen du corps de fermeture (11) pour éviter la fuite hors du récipient (13) d'un produit contenu dans le récipient (13) et/ou pour éviter la pénétration de substances dans le récipient (13).

9. Procédé selon la revendication 8, **caractérisé en ce qu'**au moyen de la sonotrode (15),
d'abord la première surface d'appui (48.1) de forme annulaire de la partie (26) de corps d'emballage et la seconde surface d'appui (48.2) de forme annulaire de la partie (26) de corps d'emballage du corps d'emballage (12) sont pressées en exerçant une force de pression (57) dans le premier sens (35) sur le bombement (40) sur l'autre partie (38) d'emballage de forme annulaire de l'autre corps d'emballage (14) et ensuite seulement, le corps de transfert d'énergie (30) du corps d'emballage (12) est pressé en exerçant une force de pression (57) dans le premier sens (35) sur le bombement (40) sur l'autre partie (38) de corps d'emballage de forme annulaire du corps d'emballage (14).
